Europäisches Patentamt

European Patent Office

Office européen des brevets

(19)

(11) Veröffentlichungsnummer: **0 047 286 B1**

(12) # EUROPÄISCHE PATENTSCHRIFT

(45) Veröffentlichungstag der Patentschrift:
16.01.85

(51) Int. Cl.⁴: **G 01 N 1/00, G 01 N 1/10**

(21) Anmeldenummer: **81900709.7**

(22) Anmeldetag: **10.03.81**

(86) Internationale Anmeldenummer:
**PCT/DE 81/00043**

(87) Internationale Veröffentlichungsnummer:
**WO 81/02632 (17.09.81 Gazette 81/22)**

(54) **EINGANGS-KOPF EINES MESS/NACHWEISSYSTEMS FÜR CHEMISCHE AGENTIEN.**

(30) Priorität: **10.03.80 DE 3009069**

(43) Veröffentlichungstag der Anmeldung:
**17.03.82 Patentblatt 82/11**

(45) Bekanntmachung des Hinweises auf die Patenterteilung:
**16.01.85 Patentblatt 85/3**

(84) Benannte Vertragsstaaten:
**CH FR GB LI NL SE**

(56) Entgegenhaltungen:
**DE - A - 1 673 239**
**DE - A - 2 022 958**
**DE - A - 2 310 264**
**FR - A - 1 573 147**
**US - A - 2 862 575**

**Int.Labor. July/Aug. 1975, S. 24-33**

(73) Patentinhaber: **Bruker-Franzen Analytik GmbH,
Kattenturmer Heerstrasse 122, D-2800 Bremen (DE)**

(72) Erfinder: **ODERNHEIMER, Bernhard, Jägerhof 4,
D-3042 Munster (DE)**
Erfinder: **KREMER, Johannes, Bahnhofstrasse 48,
D-3042 Munster (DE)**
Erfinder: **KRANICH, Klaus, Kneippweg 23,
D-3042 Munster (DE)**

(74) Vertreter: **Dipl.-Ing. H.G. Görtz, Dr.-Ing. J.H. Fuchs
Patentanwälte, Sonnenberger
Strasse 100 Postfach 26 26, D-6200 Wiesbaden (DE)**

## Beschreibung

### Technisches Gebiet

Die Erfindung bezieht sich auf einen Eingangs-Kopf eines Mess/Nachweissystems für chemische Agentien zum Erfassen dieser Agentien, mit einer beheizten Membran, die aus Dimethyl-Silicon besteht und die den Agentien direkt ausgesetzt ist, welche sich selektiv in der Membran lösen, durch sie hindurchdiffundieren und rückseitig dampfförmig austreten. In einer Ausführungsform der Erfindung wird die Membran mit einem Trägergas zum Ableiten der erfassten Agentien an das System hinterspült und weist eine Probenleitung auf, die der Membran nachgeschaltet ist und durch die dem Detektor des Mess/Nachweissystems die Probe mittels des Trägergases direkt zugeführt wird. In einer zweiten Ausführungsform der Erfindung ist die Membran als erste Stufe eines Membranseparators als direktes Einlassystem in das Hochvakuum eines Massenspektrometers ausgebildet.

### Stand der Technik

Ein derartiger Eingangs-Kopf ist durch den Aufsatz von G.E. Spangler, Internat. Laboratory July/August 1975, S. 24–33 (Tg. 3b) bekannt geworden. Er dient in ein- oder mehrstufiger Ausführung als Anreicherungs- und Einlass-System für gasförmige Proben (wie Luftproben in der Umweltüberwachung) in der Gaschromatographie oder als Übergangsglied (Interface) für die Kopplung zwischen Gaschromatographen und Massenspektrometer. Der Druckschrift ist ferner zu entnehmen, dass die Siliconmembran von einer Metallgitterscheibe abgestützt wird.

Dieser Eingangs-Kopf ist dabei so konstruiert, dass seine Anwendung auf gasförmig vorliegende Proben beschränkt ist.

Es gibt jedoch Anwendungsgebiete, bei denen diese Voraussetzung nicht erfüllt ist, bei denen also insbesondere flüssige, organische Substanzen direkt oder in wässriger Lösung vorliegen.

Die DE-B 2 022 958 beschreibt einen Eingangs-Kopf eines Mess/Nachweissystems für chemische Agentien zum Erfassen dieser Agentien, mit einer beheizten Membran, die den Agentien direkt ausgesetzt ist, welche sich selektiv in der Membran lösen, durch sie hindurchdiffundieren und rückseitig dampfförmig austreten, und die mit einem Trägergas zum Ableiten der erfassten Agentien an das System hinterspült ist. Die organischen Agentien liegen ausschliesslich in wässriger Lösung vor, d.h. die entsprechende kontaminierte Flüssigkeit wird über die Membran geleitet. Die Membran kann dabei selbsttragend ausgebildet sein oder sie kann aus dem Materialfilm bestehen, der von einem porösen gläsernen Träger gestützt wird (Spalte 2, Zeilen 20 bis 24 der DE-B).

Eine derartige Membran ist jedoch nicht für einen unmittelbaren Kontakt mit einer kontaminierten festen Oberfläche geeignet. Bei der selbsttragenden Ausführungsform würde die Membran bei dem Kontakt zerbrechen. In der Ausführungsform, bei der sich die Membran auf einem porösen gläsernen Träger befindet, würde sich die aufliegende Membranschicht verschieben und reissen.

Die bekannte Membran ist starr, nicht elastisch genug und daher nicht ausreichend strapazierfähig. Aus diesem Grunde hat man bislang – trotz grosser Anstrengungen bei einem entsprechenden Bedürfnis – die Agentien, die sich auf der festen Oberfläche befinden, nur indirekt erfassen können, indem man sie, z.B. durch Wärmeeinwirkung, in die gasförmige Phase überführte.

In der FR-A 1 573 147 ist eine Sonde zum selektiven Erfassen bestimmter Komponenten einer Probe beschrieben, mit einer Membran, die der Probe direkt ausgesetzt ist und die mit einem Trägergas zum Ableiten der erfassten Komponenten an ein Mess/Nachweissystem hinterspült ist. Da die Membran im Beispiel nach Fig. 9/10 in direktem Kontakt mit Festkörperoberflächen gebracht wird, muss sie mechanisch so stabil sein, dass sie den direkten Kontakt mit festen Oberflächen ohne Beschädigung aushält, aber auch möglichst dünn sein, damit ausreichende Mengen der zu untersuchenden Komponenten durch sie hindurchdiffundieren können. Aufgrund ihrer Konstruktion ist diese Sonde zum Abtasten fester Obeflächen nur bedingt geeignet.

Bei einem dieser Anwendungsgebiete dient der Eingangskopf als Spürsonde eines mobilen Nachweissystems, welches die Aufgabe hat, gefährliche chemische Geländekontaminationen zu erfassen, insbesondere solche Substanzen an Oberflächen aller Art aufzuspüren, die, wie z.B. einige Kampfstoffe, eine Giftwirkung über den Hautkontakt entfalten.

Ein weiteres Anwendungsgebiet ist das übliche Routine-Einlassystem für die Gaschromatographie (GC) und die Kombination Gaschromatograph/Massenspektrometer (GC/MS-Kopplung), beides wichtige Methoden der instrumentellen Umwelt- und Spurenanalytik.

Bei dem erstgenannten Anwendungsgebiet ist davon auszugehen, dass durch Umweltkatastrophen oder Einsatz sesshafter chemischer Kampfstoffe grössere Gebiete für den ungeschützten Menschen unbetretbar werden können.

Um das Ausmass solcher Geländekontaminationen mit chemischen Agentien beurteilen und frühzeitig über gezielte Schutz- und Abwehrmassnahmen entscheiden zu können, werden zahlreiche qualitative und halb-quantitative Analysen notwendig, die in bekannter Weise innerhalb kurzer Zeit weitgehend automatisiert von einem geschützten Spürfahrzeug aus vorgenommen werden.

Hierzu muss in kurzen zeitlichen und räumlichen Abständen eine Spürsonde aktiv an den Boden oder die fragliche Oberfläche gebracht werden, um einem geeigneten Detektor über eine Probenleitung in schneller Folge gasförmige Proben zuzuführen. Dabei muss die zu spürende Substanz weitgehend unzersetzt in die Gasphase überführbar sein.

Da eine hohe Frequenz an Einzelmessungen erreicht werden soll, muss ein Messignal rasch wieder abklingen; ein Memory-Effekt von Bedeutung darf nicht auftreten.

Die Empindlichkeitsforderung an das Nachweissystem richtet sich nach der perkutanen Toxizität des zu detektierenden Berührungsgiftes; Belegungsdichten in der Grössenordnung von Milligramm pro Quadratmeter nicht absorbierender Oberfläche müssen bei hochtoxischen Substanzen noch erfasst werden können.

Sind verdampfbare Substanzen im Gelände oder an einer Oberfläche durch ein mobiles Nachweissystem zwar detektiert, nicht aber zweifelsfrei identifiziert worden, so wird eine Probenahme und Probespeicherung erforderlich zur späteren Untersuchung im analytischen Laboratorium. Die Probemenge muss ausreichen, die Identifikation oder gar Strukturaufklärung des unbekannten Stoffes zu ermöglichen.

Bei den bisherigen Überlegungen zur Spürsonde für chemische Geländekontaminationen ging man davon aus, dass der vorhandene sesshafte Schadstoff durch Aufheizen mittels Infrarotstrahler in die Gasphase überführt werden müsse, um danach als kontaminierter Luftstrom durch eine beheizte, mehrere Millimeter weite Probenleitung einem Detektor zugeführt zu werden, der sich im Fahrzeuginneren befindet.

Diese Messanordnung weist eine Reihe von Nachteilen auf. Sie trägt dem Hauptgefährdungskriterium, nämlich dem unmittelbaren Hautkontakt mit der kontaminierten Oberfläche, ungenügend Rechnung; Messwerte, erhalten durch Aufheizen des Bodens oder einer Oberfläche und Verdampfen des Schadstoffs aus einigem Abstand mittels IR-Strahler, sind nur sehr vage mit der Kontaktgefährdung korrelierbar.

Die Qualität «Bodenoberfläche» ist nicht definiert. Sie hängt in starkem Masse von Bodenbedeckungen und Witterungseinflüssen ab wie Bewuchs, Strassendecke, Bodenart. Damit ist ein über die Oberflächentemperatur kontrolliertes Aufheizen unmöglich. Einerseits sind Aufheizaufenthalte von mehreren Minuten erforderlich, um bei schwerflüchtigen Schadstoffen ausreichenden Dampfdruck zu erreichen; andererseits werden bei intensiver IR-Bestrahlung nach Austrocknung des Bewuchses durch Versengen oder gar Entflammen der Oberfläche unvermeidliche störende Pyrolyseprodukte gebildet, so dass die gesuchte Substanz nicht mehr nachgewiesen werden kann oder das Nachweissystem zur Falschanzeige veranlasst wird.

Kontaminierter Schnee müsste zunächst geschmolzen und das Schmelzwasser verdampft werden, bevor eine ausreichende Temperaturerhöhung stattfindet.

Der Luftdurchsatz des bisherigen Systems IR-Strahler/Probeleitung liegt in der Grössenordnung von einigen Litern pro Minute. Dies bedeutet, dass alle Messungen infolge starker Verdünnung eines ohnehin nur in Spuren vorhandenen verdampften Schadstoffs im Bereich der Erfassungsgrenze des Detektors vorgenommen und entsprechend unsichere Ergebnisse erhalten werden: Selbst wenn relativ hohe Belegungsdichten vorliegen, bleibt die Schadstoffkonzentration in der Probenleitung und damit auch bei sehr empfindlichen Detektoren das Verhältnis Signalintensität zu Rauschen ungünstig klein.

Eine effiziente Probenahme mittels Adsorptionsröhrchen ist nicht möglich. Vielmehr ist man auf die Entnahme von Boden-, Pflanzen- oder Wasserproben angewiesen.

IR-Strahler und Probenleitung sind mit einem Memoryeffekt behaftet, der von den relativ grossen kontaminierbaren Oberflächen der Messanordnung herrührt und durch allmähliches Verschmutzen dieser Oberflächen gesteigert wird.

Schwerflüchtige Stoffe können eine über Stunden andauernde Kontamination des Systems bewirken. Die daraus folgende Spürrate kann, gemessen an den Forderungen, die sich aus dem Anwendungszweck ableiten, nicht akzeptiert werden.

Das zur Deckung des Heizstrombedarfs von mehreren Kilowatt für IR-Strahler und Probenleitung eigens mitgeführte Stromerzeugeraggregat ist nicht nur zusätzlicher Kraftstoffverbraucher und lästige Lärmquelle; es beeinflusst durch beträchtliches Gewicht auch die Fahreigenschaften und gegebenenfalls Schwimmfähigkeit des Spürfahrzeugs.

Ein anderer Anwendungszweck liegt, wie eingangs erwähnt, im Bereich der instrumentellspurenanalytischen Laborroutine. Hier wird nicht das Nachweissystem via Spürsonde aktiv an die fragliche, unbewegte Probe, z.B. den Geländepunkt, herangebracht; vielmehr führt man umgekehrt bewegliche Proben einem ortsfest im Laboratorium betriebenen GC- oder GC/MS-Nachweissystem zu.

Als Mittler zwischen Probe und Nachweissystem fungiert hier in Analogie zur beweglichen Spürsonde das fest installierte Einlassystem.

Die übliche Probeneingabe geschieht in der Gaschromatographie und GC/MS-Kopplung über den sog. Injektor in der Weise, dass ein kleines Flüssigkeitsvolumen, z.B. 1 Mikroliter einer verdünnten Probelösung, in eine Injektionsspritze gezogen, mit der Injektionsnadel ein Gummiseptum durchstochen und die Probelösung auf den Anfang der beheizten, trägergasdurchströmten Trennsäule gespritzt wird, wo die Probe verdampft und der Trennvorgang beginnt.

Der Nachteil dieser allgemein angewendeten Probeneinlassmethode liegt darin, dass die Probe als eigentliche Flüssigkeit oder als Lösung in organischem Solvens vorliegen muss, und zwar in einer Menge, die das Eintauchen der Injektionsnadel zum Füllen der Injektionsspritze gestattet.

Befindet sich aber eine geringe Menge der zu erfassenden Substanz in einer Materialprobe, zum Beispiel

– fein verteilt in einer Bodenprobe,
– als dünner Film oder in feinen Tröpfchen auf einer Feststoff-, Wasser- oder Schneeoberfläche,
– als flüchtiger Bestandteil eines Anstrichs oder einer anderen dünnen Schicht, in der – ähnlich den Weichmachern in Kunststoffen – diffusionsfähige Substanzen gelöst oder an welcher solche Substanzen adsorbiert sind,
– gelöst oder suspendiert in Wasser oder wässrigen Schlämmen,
so muss vor der Probeninjektion ein Extraktionsschritt mit einem organischen Solvens durchgeführt werden. Dieser Probenvorbereitungsgang ist zeitraubend und arbeitsintensiv. Er kann auch zu beträchtlichen Substanzverlusten führen, namentlich beim Einengen relativ leicht flüchtiger Substanzen.

Darstellung der Erfindung

Der Erfindung liegt die Aufgabe zugrunde, den oben bezeichneten Eingangs-Kopf so auszubilden, dass er auf den vorgenannten Anwendungsgebieten – vorteilhafter als die bisher bekannten Lösungsprinzipien – anwendbar ist, d.h. ein Spürsonden- bzw. ein Probeneinlass-System zu entwickeln, mit dessen Hilfe diffusionsfähige organische Verbindungen, z.B. auch Kampfstoffe, an Oberflächen oder in Oberflächen-Schichten im mobilen Einsatz bzw. im Laboratorium schnell und ausreichend empfindlich qualitativ und halbquantitativ erfasst, d.h. detektiert und identifiziert werden können.

Die Lösung dieser Aufgabe gelingt gemäss der Erfindung dadurch, dass die Membran ein 50 bis 200 μm starkes Metall-Köpertressen-Gewebe aufweist, das mit einer polymerisierbaren, die Membranfunktion liefernden Dimethyl-Silicon-Paste gleichmässig und lückenlos beschichtet ist.

Als Detektor kann ein Massenspektrometer oder ein anderer in der Gaschromatographie gebräuchlicher Detektor verwendet werden. Auch ein Prüfröhrchen ist als Detektor geeignet.

An die Probenleitung kann ein Sorptionsröhrchen für eine Probenentnahme angeschlossen sein. Die Membran und Probenleitungstemperatur wird vorteilhaft dem gaschromatographischen Verhalten der jeweils erwarteten Substanz angepasst. Die Probenleitung besteht vorzugsweise aus einem chemisch inerten Material, wie z.B. Quarz oder Reinnickel. Sie kann eine unbelegte Kapillare, eine belegte Trennkapillare oder eine gepackte oder mikrogepackte Trennsäule sein.

Wenn die Kontaktmembran als direktes Einlassystem ins Hochvakuum eines Massenspektrometers fungiert, also kein Trägergas verwendet wird, wird dem ein- oder mehrstufigen Membranseparator vorzugsweise ein evakuiertes Gasprobenvolumen nachgeschaltet.

Die Kontaktmembran kann vorteilhafterweise von aussen durch ein heisses Inertgas gespült werden, welches die Kontaktmembran auf der gewünschten Temperatur hält, das Durchdringen unerwünschter Störgase, wie Sauerstoff und Wasserdampf, verhindert und den Memoryeffekt verringert. Die Kontaktmembran kann durch eine zweite dünne, leicht auswechselbare Kontaktmembran geschützt werden.

Gewerbliche Verwertbarkeit

Durch die Erfindung werden auf dem erstgenannten Anwendungsgebiet als mobile Gelände-Spürsonde folgende Vorteile erzielt:

– Die Messanordnung wird dem wesentlichen Gefährdungsmoment, dem unmittelbaren Hautkontakt mit der kontaminierten Oberfläche, insofern gerecht, als hier wie dort eine Membran/Haut durch Kontakt Schadstoff aufnimmt, das strömende Medium Trägergas/Körperflüssigkeit den Transport übernimmt an einen Ort, an dem der Schadstoff seine Wirkung als Detektorsignal/Symptom entfaltet. Das Konzept ermöglicht damit eine realistischere quantitative Abschätzung der Gefährdung.

– Die hohe Strömungsgeschwindigkeit in der Kapillare bedeutet schnellen Probentransport über mehrere Meter und damit eine kurze Ansprechzeit des Nachweissystems.

– Ein Memoryeffekt wird nicht beobachtet. Die Probenleitung ist durch die Membran wirkungsvoll vor Verschmutzung geschützt. Bei Wahl der geeigneten Membran- und Probenleitungstemperatur können auch schwerflüchtige Stoffe (mit Dampfdruck) unter $10^{-3}$ mbar bei 20°C) mehrmals innerhalb einer Minute erfasst werden.

– Als Folge des mit einigen Millilitern pro Minute klein gehaltenen Durchflussvolumens werden aus Schadstoffspuren, die praktisch augenblicklich durch die Membran ins Trägergas gelangt sind, kurzzeitig hohe Schadstoffkonzentrationen erzeugt und vom Detektor mit entsprechend günstigem Verhältnis Signalintensität zu Rauschen registriert.

– Überhitzung von Oberflächen und damit pyrolytische Störungen der Messungen sind ausgeschlossen.

– Wässrige Proben, Eis und Schnee können ebenfalls im Schnellverfahren grob auf Schadstoffe untersucht werden, wobei eine Flüssig-Fest-Extraktion mit Anreicherung der organischen Komponente in der hydrophoben Siliconmembran stattfindet.

– Der Spürhalt beträgt nur wenige Sekunden.

– Der Energiebedarf von ca. 100 Watt kann von der Lichtmaschine des Spürfahrzeugs gedeckt werden.

– Die Anordnung gestattet den Ausbau der Probenleitung zur gaschromatographischen Trennsäule durch Belegen mit einer stationären Phase. Verwendet man schliesslich als universellen Detektor ein Massenspektrometer, so resultiert ein mobiles GC/MS-System, das in bekannter vorteilhafter Weise die GC-Trennleistung mit der Empfindlichkeit und variablen Spezifität des Massenspektrometers verknüpft. Realisierbar ist auch der Parallelbetrieb von unbelegter und belegter Probenleitung für alternativ schnelle Detektion oder langsamere Identifikation, wobei im letzteren Falle die Retentionszeiten der GC-Trennung in Kauf zu nehmen sind.

– Die Probenahme zum Zwecke einer späteren Laboranalyse kann bequem mittels Sorptionsröhrchen vorgenommen werden, das von schadstoffbeladenem Trägergas durchströmt wird: Man erhält so eine gegebenenfalls gaschromatographisch vorgereinigte, beständige Substanzprobe in reichlicher Menge.

Auf dem zweitgenannten Anwendungsgebiet – Einlassystem für GC – werden nachfolgende Vorteile erzielt:

- Der Probeneinlass wird für einen grossen Teil der im GC- und GC/MS-Labor vorkommenden qualitativen und halbquantitativen Routine- und Übersichtsanalysen ohne Einbussen an Trennleistung und Empfindlichkeit erheblich vereinfacht.
- Flüssigkeitsproben, auch wässrige Lösungen oder Suspensionen, können zur schnellen Übersichtsanalyse durch Benetzen eines Glasstäbchens, das dann an die Kontaktmembran geführt wird, in bequemer Weise dosiert werden.
- Die Methode ist einer Automatisierung leicht zugänglich.
- Die quantitative Reproduzierbarkeit ist bei Anpassung der Bedingungen an das spezielle Analysenproblem ausreichend.
- Die Probenvorbereitungszeit ist bei Untersuchungen von Oberflächen auf GC-gängige Stoffe durch Ausschalten des sonst notwendigen Extraktionsschrittes auf einen Bruchteil reduziert, d.h. es kann ein Vielfaches an Proben in der gleichen Zeit bewältigt werden: Die fragliche Oberfläche ist lediglich an die Kontaktmembran heranzuführen.
- Leichtflüchtige polare Lösungsmittel wie Methanol, wegen seines niedrigen Molgewichts bei GC/MS-Analysen häufig eingesetzt, werden zugunsten eines weniger polaren gelösten Stoffes diskriminiert: Bei mässig erwärmter Kontaktmembran wird so das Lösungsmittel nahezu vollständig vor Eintritt in die Trennsäule entfernt, der gelöste Stoff aber relativ angereichert von der Membran sorbiert und schliesslich durch ein Temperaturprogramm in Richtung Trennsäule mobilisiert.

Kurzbeschreibung der Zeichnungen
Anhand von in der Zeichnung beschriebenen Ausführungsbeispielen wird die Erfindung näher erläutert.

Es zeigen:

Fig. 1 eine Prinzipdarstellung des erfindungsgemässen Eingangs-Kopfes
Fig. 2 eine Prinzipdarstellung eines GC-Einlassystems nach der Erfindung
Fig. 3 eine schematische Darstellung einer Probeentnahme.

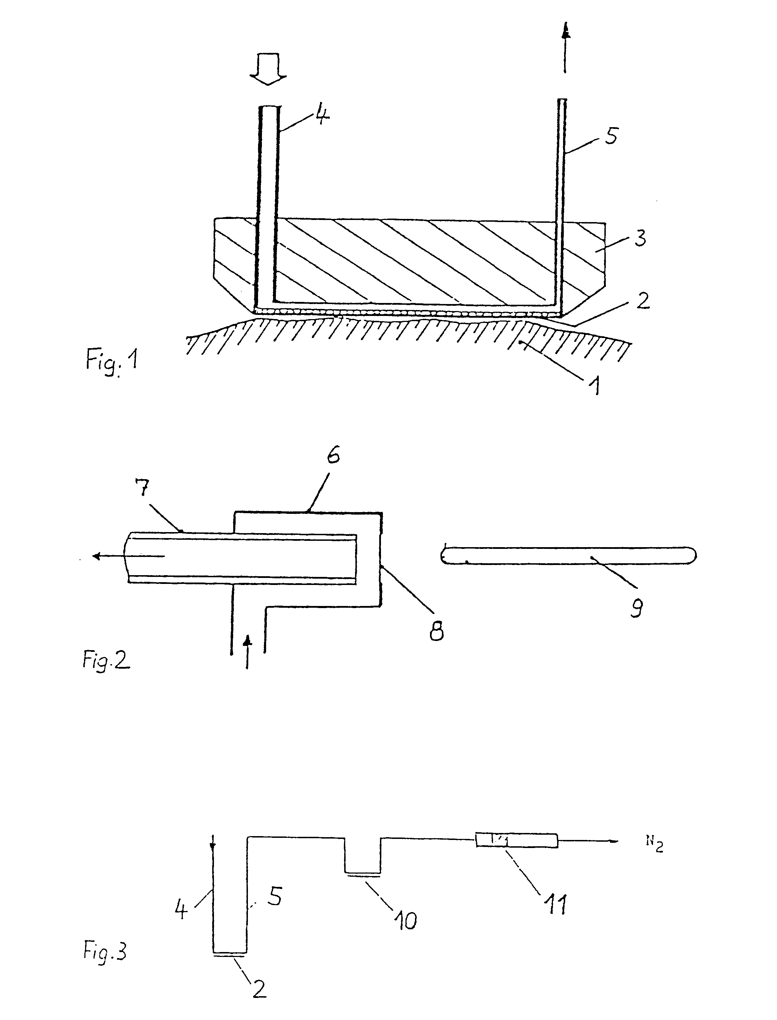

Beschreibung der besten Ausführungsformen der Erfindung
In Fig. 1 ist mit 1 eine Probe eines chemischen Agens bzw. mit einem chemischen Agens kontaminierte Oberfläche bezeichnet. In direktem Kontakt damit steht eine Membran 2, die an einem beheizten Metallblock 3 angebracht ist. Zur Hinterspülung der Membran mit einem Trägergas, z.B. $N_2$ ist eine Trägergaszuleitung 4 vorgesehen, in die in Pfeilrichtung das Trägergas eingeleitet wird.

Es ist weiterhin eine beheizte Kapillare 5 vorgesehen, die als Probenleitung zu einem nicht dargestellten Detektor des Nachweissystems, z.B. einem Massenspektrometer (in Pfeilrichtung) dienen kann oder die bei der Anwendung als GC-Einlassystem als gaschromatographische Trennsäule wirksam ist.

Die Membran 2 ist möglichst dünn ausgebildet und ist dennoch mechanisch ausreichend stabil, damit sie ohne Beschädigung in direkten Kontakt mit den chemischen Agentien bringbar ist. Die kontaktierten Agentien lösen sich selektiv in der Membran, diffundieren durch sie hindurch und treten rückseitig dampfförmig aus, wo sie von dem Trägergasstrom mitgenommen und danach weiter ausgewertet werden.

Die Kapillare besteht zweckmässig aus einem chemisch inerten Material, z.B. Quarz oder Reinnickel, um jegliche Beeinflussung der erfassten Agentien auszuschliessen.

Die Membran weist ein dem vorgesehenen Anwendungszweck entsprechend thermisch und mechanisch belastbares, chemisch inertes Gewebe auf, das mit einer polymerisierbaren Paste gleichmässig und lückenlos dünn beschichtet ist. Das Gewebe ist ein 50–200 Mikrometer starkes Metallgewebe, vorzugsweise ein Nickel-Köpertressengewebe. Die Paste ist eine Dimethylsilicon-Paste.

Nach erfolgter Polymerisation wird dabei die so behandelte Membran einem Konditionierungsprozess bei erhöhter Temperatur unterworfen.

Wesentlich an der gezeigten Anordnung ist die kleine Oberfläche einer Kapillare ebenso wie die hohe Strömungsgeschwindigkeit und angemessene Temperatur von Membran und Kapillare, die dem gaschromatographischen Verhalten der jeweils erwarteten Substanz angepasst ist.

Die Kapillare ist für den Anwendungsfall als Kampfstoff-Geländeprüfsonde zweckmässig eine bis zu 4 m lange geheizte Nickelkapillare.

Es ist dabei zweckmässig flammenphotometrische Detektoren, die gleichzeitig Phosphor und Schwefel anzeigen, oder ein mikroprozessorgesteuertes Massenspektrometer zu verwenden.

Anhand der Fig. 2 soll die Anwendung des erfindungsgemässen Eingangs-Kopfes als Probeneinlassystem für die Gaschromatographie und die Kombination Gaschromatographie/Massenspektrometrie (GC/MS-Kopplung) beschrieben werden. Die Gaschromatographie (GC) ermöglicht die Auftrennung von Gemischen und den Nachweis einzelner Komponenten, sofern sie unzersetzt in die Gasphase überführt wurden. Gaschromatographen bestehen im wesentlichen aus

- einem Probeninjektor mit einem beheizten Injektorgehäuse 6, das einen Einlass 8 für ein Trägergas aufweist,

– einer trägergasdurchströmenden Trennsäule 7 und
– einem nicht dargestellten Detektor, der mehr oder weniger selektiv bzw. substanzspezifisch ist, z.B. Phosphordetektor, Massenspektrometer (MS).

Die Probeneingabe geschieht im bekannten Fall in der Weise, dass ein kleines Flüssigkeitsvolümen, z.B. 1 µl einer verdünnten Probelösung, in eine Injektionsspritze gezogen, mit der Injektionsnadel ein 3–4 mm dickes Gummiseptum an der Stirnseite des Injektorgehäuses durchstochen und die Probeflüssigkeit auf den Anfang der beheizten Trennsäule gespritzt wird, wo die Probe verdampft und der Trennvorgang beginnt.

Der Vorteil dieser allgemein üblichen Probeneinlassmethode liegt in der guten Reproduzierbarkeit bei quantitativen Analysen; vom Operateur wird hierbei allerdings Übung und Geschick verlangt.

Der Nachteil ist, dass die Probe als eigentliche Flüssigkeit oder als Lösung in organischem Solvens vorliegen muss, und zwar in einer Menge, die das Eintauchen der Injektionsnadel zum Füllen der Injektionsspritze gestattet, wobei Wasser als Solvens ausscheidet.

Befindet sich nun eine geringe Menge einer zu untersuchenden Substanz in einer kontaminierten Materialprobe, z.B. fein verteilt in einer Bodenprobe oder als dünner Film auf einer Oberfläche oder stellt die Probe eine wässrige Lösung dar, so muss vor der Probeninjektion eine Anreicherung bzw. eine Extraktion mit einem Solvens erfolgen.

Dieser Probenvorbereitungsgang ist zeitraubend und führt meist zu grossen Substanzverlusten, namentlich bei Einengen von Lösungen relativ flüchtiger Substanzen.

Beim in Fig. 2 dargestellten erfindungsgemässen Probeneinlassystem ist das Septum des üblichen Probeninjektors 6 durch eine dünne, trägergashinterspülte, angemessen geheizte Membran 8 ersetzt. Die kontaminierte fragliche Materialprobe wird kurzzeitig in direkten Kontakt mit der Membran gebracht. Vorhandene diffusionsfähige Kontaminanten lösen sich in der Membranoberfläche, diffundieren durch die Membran hindurch und werden vom Trägergas nach ihrem Austritt aus der Membranrückseite unmittelbar in die Trennsäule 7 transportiert. Eine vorherige Lösungsmittelextraktion erübrigt sich.

Liegt eine grössere Probemenge vor in Form einer Flüssigkeit, so kann man z.B. einen Glasstab 9 damit benetzen und diesen an die Membran führen, ein äusserst einfacher Vorgang im Vergleich zur Spritzeninjektion.

Das dargestellte Membran-Probeneinlasssystem eignet sich, besonders in Kopplung mit einem Massenspektrometer, zur Durchführung schneller qualitativer und halbquantitativer Übersichtanalysen.

Die Membran kann auch direkt an einem Massenspektrometer angebracht sein, um unter Verzicht auf eine Vakuumschleuse und auf die gaschromatographische Vortrennung der Probe den Probeneinlass direkt ins Hochvakuum des Massenspektrometers zu bewerkstelligen. Diese Anordnung ist zweckmässig in Fällen, bei denen besonders hohe Nachweisempfindlichkeit erforderlich ist und aufgrund von Vorkenntnissen über die Probe qualitativ bereits ein bestimmter Verdacht besteht.

Die Trennsäule 7 kann eine gepackte Säule sein; sie ist vorzugsweise eine Kapillarsäule.

Treten bei der Anwendung als Spürsonde unbekannte oder an Ort und Stelle nicht eindeutig identifizierbare Stoffe auf, so müssen Proben entnommen werden, die später in einem Untersuchungslabor analysiert werden müssen.

In Fig. 3 ist eine sehr einfache Möglichkeit der Probenahme mittels einer Spürsonde nach Fig. 1 aufgezeigt, die ohne jede zusätzliche mechanische Einrichtung durch Kombination der Kapillarprobenleitung 5 mit einem Sammelröhrchen realisierbar ist. Bislang wurden diese Proben mittels mechanisch wirkender Probenahmewerkzeuge genommen.

Der von der Membran 2 erfasste Stoff wird dampfförmig durch die Kapillare 5 an einen Detektor 10 geleitet, der nur einen Teil des Stoffs zum Nachweis benötigt.

Der restliche, z.B. an der Einlassmembran eines Massenspektrometers vorbeiströmende Stoffanteil wird mittels Trägergas oder unterstützt durch eine Saugpumpe einem Röhrchen 11 zugeführt, wie es in mancherlei Variationen in der Umweltanalytik gebräuchlich ist, das mit absorbierendem Material, z.B. Tenax-GC, gefüllt ist.

Bei geeigneter Konstruktionsweise des Röhrchens kann man das Adsorbat wieder eluieren.

Vorteile dieser Variante der Probenahme sind:

– Da beim Spürvorgang ohnehin Proben genommen werden, erübrigt sich eine zusätzliche Vorrichtung eigens für die Probenahme, die technisch aufwendig und damit störanfällig und kostspielig ist, wenn Bodenproben geschürft werden sollen.
– Die eigentlich interessierende Oberflächenkontamination wird gezielt erfasst.
– Es wird ein erheblicher Zeitgewinn erzielt.
– Die Probe ist bereits bei der Probenahme von Trägermaterial wie nassen Böden, Pflanzenmaterial etc. getrennt, was ihre Auswertung im Labor wesentlich vereinfacht und verkürzt: Schnelle Elution auch geringer Kampfstoffmengen ist möglich.
– Die Probe ist besser haltbar, weil sie von aktiven Oberflächen getrennt wurde und in relativ hoher Reinheit und in relativ grosser Menge vorliegt.
– Einzelfraktionen von Mehrkomponenten-Gemischen können getrennt aufgefangen und gelagert werden. Dadurch wird die spätere Laboranalyse ebenfalls erleichtert.
– Die Einzelprobe hat geringe Abmessungen, etwa wie Träger-Prüfröhrchen.
– Die Spürsonde selbst liefert relativ hohe Konzentrationen auch von geringen Kampfstoff-Absolutmengen; dadurch werden gute Absorptionsausbeuten erzielt.

– Ein zusätzlicher Energiebedarf für eine elektromotorisch bewegte Mechanik entfällt.

## Patentansprüche

1. Eingangs-Kopf eines Mess/Nachweis-Systems für chemische Agentien zum Erfassen dieser Agentien, mit einer beheizten Membran (2), die aus Dimethyl-Silicon besteht und die den Agentien direkt ausgesetzt ist, welche sich selektiv in der Membran lösen, durch sie hindurchdiffundieren und rückseitig dampfförmig austreten, und die mit einem Trägergas zum Ableiten der erfassten Agentien an das System hinterspült ist, und mit einer Probenleitung (5), die der Membran (2) nachgeschaltet ist, und durch die dem Detektor des Mess/Nachweis-Systems die Probe mittels des Trägergases direkt zugeführt wird, dadurch gekennzeichnet, dass die Membran (2) ein 50 bis 200 μm starkes Metall-Köpertressen-Gewebe aufweist, das mit einer polymerisierbaren, die Membranfunktion liefernden Dimethyl-Silicon-Paste gleichmässig und lückenlos beschichtet ist.

2. Eingangs-Kopf nach Anspruch 1, dadurch gekennzeichnet, dass die Probenleitung (5) beheizbar ist.

3. Eingangs-Kopf nach Anspruch 1, dadurch gekennzeichnet, dass die Probenleitung (5) als gaschromatographische Trennsäule ausgebildet ist.

4. Eingangs-Kopf nach Anspruch 1, dadurch gekennzeichnet, dass der Detektor ein Massenspektrometer oder ein anderer in der Gaschromatographie gebräuchlicher Detektor ist.

5. Eingangs-Kopf nach Anspruch 1, dadurch gekennzeichnet, dass der Detektor ein Prüfröhrchen ist.

6. Eingangs-Kopf nach Anspruch 1, dadurch gekennzeichnet, dass an die Probenleitung ein Sorptionsröhrchen (11) für eine Probenentnahme angeschlossen ist.

7. Eingangs-Kopf nach Anspruch 1, dadurch gekennzeichnet, dass die Membran- und Probenleitungstemperatur dem gaschromatographischen Verhalten der jeweils erwarteten Substanz angepasst ist.

8. Eingangs-Kopf nach Anspruch 1, dadurch gekennzeichnet, dass die Probenleitung (5) aus einem chemisch inerten Material besteht.

9. Eingangs-Kopf nach Anspruch 1, dadurch gekennzeichnet, dass das Material Quarz oder Reinnickel ist.

10. Eingangs-Kopf nach Anspruch 1, dadurch gekennzeichnet, dass die Probenleitung eine unbelegte Kapillare (5) ist.

11. Eingangs-Kopf nach Anspruch 1, dadurch gekennzeichnet, dass die Probenleitung eine belegte Trennkapillare ist.

12. Eingangs-Kopf nach Anspruch 1, dadurch gekennzeichnet, dass die Probenleitung eine gepackte oder mikrogepackte Trennsäule ist.

13. Eingangs-Kopf eines Mess/Nachweis-Systems für chemische Agentien zum Erfassen dieser Agentien, mit einer beheizten Membran (2), die aus Dimethyl-Silicon besteht und die den Agentien direkt ausgesetzt ist, welche sich selektiv in der Membran lösen, durch sie hindurchdiffundieren und rückseitig dampfförmig austreten, wobei die Membran (2) als erste Stufe eines Membranseparators als direktes Einlassystem ins Hochvakuum eines Massenspektrometers ausgebildet ist, dadurch gekennzeichnet, dass die Membran (2) ein 50 bis 200 μm starkes Metall-Köpertressen-Gewebe aufweist, das mit einer polymerisierbaren, die Membranfunktion liefernden Dimethyl-Silicon-Paste gleichmässig und lückenlos beschichtet ist.

14. Eingangs-Kopf nach Anspruch 13, dadurch gekennzeichnet, dass der Membranseparator ein ein- oder mehrstufiger Llewellyn-Membranseparator ist.

15. Eingangs-Kopf nach Anspruch 1 oder 13, dadurch gekennzeichnet, dass das Metall-Köpertressen-Gewebe ein Nickel-Köpertressen-Gewebe ist.

16. Verwendung des Eingangs-Kopfs nach Anspruch 1 oder 15 als Spürsonde für die mobile Detektion organischer Substanzen, die sich auf festen Oberflächen innerhalb dünner Schichten, wie z.B. Anstrichen, befinden, insbesondere solcher Substanzen, die den Menschen über den Hautkontakt gefährden können.

## Claims

1. Input head of a measuring/identification system for chemical agents for detecting these agents, with a heated membrane (2) consisting of dimethyl silicon and being exposed directly to the agents which dissolve selectively in the membrane, diffuse through it and emerge on the other side in vapour form, and which is (back-)flushed with a carrier gas for conducting the agents detected to the system, and with a sample line (5) being connected in series to the membrane (2) and through which the sample is passed directly to the detector of the measuring/identification system by means of the carrier gas, characterized in that the membrane (2) comprises a braided metal fabric, 50 to 200 μm thick, being completely and evenly coated with a polymerizable dimethyl silicon paste which supplies the membrane function.

2. Input head according to claim 1, characterized in that the sample line (5) is heatable.

3. Input head according to claim 1, characterized in that the sample line (5) is embodied as a gas chromatography separating column.

4. Input head according to claim 1, characterized in that the detector is a mass spectrometer or a different detector used in gas chromatography.

5. Input head according to claim 1, characterized in that the detector is a test tube.

6. Input head according to claim 1, characterized in that a sorption tube (11) is connected to the sample line for sampling.

7. Input head according to claim 1, characterized in that the membrane- and sample line temperature are respectively adjusted to the gas chromatography behaviour of the expected substance.

8. Input head according to claim 1, characterized in that the sample line (5) consists of a chemically inert material.

9. Input head according to claim 1, characterized in that the material is quartz or pure nickel.

10. Input head according to claim 1, characterized in that the sample line is an uncoated capillary tube (5).

11. Input head according to claim 1, characterized in that the sample line is a coated capillary column.

12. Input head according to claim 1, characterized in that the sample line is a packed or micropacked chromatography column.

13. Input head of a measuring/identification system for chemical agents for detecting these agents, with a heated membrane (2) consisting of dimethyl silicon and being exposed directly to the agents which dissolve selectively in the membrane, diffuse through it and emerge on the other side in vapour form, whereby the membrane (2) is designed as the first step of a membrane separator direct inlet system into the high vacuum of a mass spectrometer, characterized in that the membrane (2) comprises a braided metal fabric, 50 to 200 µm thick, being completely and evenly coated with a polymerizable dimethyl silicon past which supplies the membrane function.

14. Input head according to claim 13, characterized in that the membrane separator is a one-step or a multi-step Llewellyn membrane separator.

15. Input head according to claim 1 or 13, characterized in that the metal twill-laced fabric is a braided nickel fabric.

16. Use of the input head according to claim 1 or 15 as a detection probe for the mobile detection or organic substances on solid surfaces within thin layers, such as e.g. paints, in particular such substances which can endanger people through skin contact.

## Revendications

1. Tête d'entrée d'un dispositif de détection et mesure d'agents chimiques avec récupération de ces agents, comportant une membrane (2) chauffée, qui est constituée en diméthyle-silicone et qui est exposée directement aux agents, lesquels sont dissous sélectivement dans la membrane, diffusent à travers celle-ci et en sortent sous forme de vapeurs, ladite membrane étant balayée par un gaz porteur pour dégager l'agent récupéré vers le dispositif, et une canalisation de prélèvement (5) connectée à la membrane (2), à travers laquelle l'échantillon est directement envoyé au détecteur du dispositif à l'aide du gaz porteur, caractérisée en ce que la membrane (2) comporte un tissu métallique croisé d'épaisseur comprise entre 50 et 200 microns qui est recouvert de façon régulière et sans lacune par une pâte polymérisable de diméthyle-silicone remplissant la fonction de membrane.

2. Tête d'entrée selon la revendication 1, caractérisée en ce que la canalisation de prélèvement (5) est chauffable.

3. Tête d'entrée selon la revendication 1, caractérisée en ce que la canalisation de prélèvement (5) est conformée en colonne de séparation pour chromatographie gazeuse.

4. Tête d'entrée selon la revendication 1, caractérisée en ce que le détecteur est un spectromètre de masse ou un autre détecteur courant en chromatographie gazeuse.

5. Tête d'entrée selon la revendication 1, caractérisée en ce que le détecteur est un tube à essai.

6. Tête d'entrée selon la revendication 1, caractérisée en ce qu'un tube d'absorption (11) est connecté à la canalisation de prélèvement pour une prise d'échantillon.

7. Tête d'entrée selon la revendication 1, caractérisée en ce que la température de la membrane et de la canalisation de prélèvement est ajustée à chaque instant en fonction du contenu en chromatographie gazeuse de la substance attendue.

8. Tête d'entrée selon la revendication 1, caractérisée en ce que la canalisation de prélèvement (5) est constituée en un matériau chimiquement inerte.

9. Tête d'entrée selon la revendication 1, caractérisée en ce que le matériau est le quartz ou le nickel pur.

10. Tête d'entrée selon la revendication 1, caractérisée en ce que la canalisation de prélèvement est un capillaire non garni.

11. Tête d'entrée selon la revendication 1, caractérisée en ce que la canalisation de prélèvement est un capillaire de séparation garni.

12. Tête d'entrée selon la revendication 1, caractérisée en ce que la canalisation de prélèvement est une colonne de séparation de type empaquetage ou micro-empaquetage.

13. Tête d'entrée d'un dispositif de détection et mesure d'agents chimiques avec récupération de ces agents, comportant une membrane (2) chauffée, qui est constituée en diméthyle-silicone et qui est exposée directement aux agents, lesquels sont dissous sélectivement dans la membrane, diffusent à travers celle-ci et en sortent sous forme de vapeurs, ladite membrane (2) étant conformée comme le premier étage d'un séparateur à membrane, en tant que dispositif d'introduction directe dans la cavité à vide poussé d'un spectromètre de masse, caractérisée en ce que la membrane (2) comporte un tissu métallique croisé d'épaisseur comprise entre 50 et 200 microns qui est recouvert de façon régulière et sans lacune par une pâte polymérisable de diméthyle-silicone remplissant la fonction de membrane.

14. Tête d'entrée selon la revendication 13, caractérisée en ce que le séparateur à membrane est un séparateur à membrane Llewellyn à un ou plusieurs étages.

15. Tête d'entrée selon l'une quelconque des précédentes revendications, caractérisée en ce que le tissu métallique est constitué en nickel.

16. Utilisation d'une tête d'entrée selon l'une quelconque des précédentes revendications en tant que sonde de recherche pour la détection mobile de substances organiques qui se trouvent sur des surfaces solides à l'intérieur de couches minces telles que des couches de peinture, en particulier de telles substances susceptibles de présenter des dangers pour le contact avec la peau des humains.

Fig. 1

Fig. 2

Fig. 3